# EUROPÄISCHE PATENTSCHRIFT

(11) **EP 1 058 050 B1**
(45) Veröffentlichungstag und Bekanntmachung des Hinweises auf die Patenterteilung: **26.05.2004**
(21) Anmeldenummer: 00105804.9
(22) Anmeldetag: 18.03.2000
(51) Int. Cl.: F23C 3/00, F16L 23/028

(54) **Halterung zur temperaturbeständigen Festlegung eines Rohres**
Mounting for temperature resistant pipe fixation
Montage pour une fixation de tube résistant à la température

(30) Priorität: 31.05.1999 DE 19924731
(43) Veröffentlichungstag der Anmeldung: 06.12.2000
(73) Patentinhaber: AICHELIN GMBH, 70825 Korntal-Münchingen (DE)
(72) Erfinder: Harbeck, Wolfgang, Dr., 09573 Leubsdorf (DE); Weiss, Karl, Dipl.-Ing., 09599 Freiberg (DE); Distl, Rudolf, 71691 Freiberg a. Neckar (DE)
(74) Vertreter: Gahlert, Stefan, Dr.-Ing.

(56) Entgegenhaltungen:
- EP-A- 0 939 270
- GB-A- 2 057 652
- US-A- 2 822 798
- US-A- 3 549 178
- US-A- 3 694 007
- US-A- 4 134 720
- US-A- 5 224 857

## Beschreibung

Die Erfindung betrifft eine Halterung zur temperaturbeständigen Festlegung eines Rohres an einem Flansch, insbesondere zur Festlegung eines keramischen Strahlrohres bei einem Industrieofen, mit einem am Flansch gehaltenen Spannteil, über den ein Endes des Rohres gegen den Flansch verspannbar ist.

Eine derartige Halterung ist aus der DE 195 05 401 C1 bekannt.

Für die indirekte Beheizung oder Kühlung von Industrieöfen werden häufig sogenannte Strahlrohre benutzt, die durch Öffnungen in der Ofenwand eingebaut und dort abgedichtet werden. Zur Wärmezufuhr dienen Brenner oder Elektroheizungen, zur Wärmeabfuhr Kühlsysteme, die in das Strahlrohr eingesetzt werden. Als Werkstoff für die Strahlrohre wird vielfach hitzebeständiger Stahl verwendet, in zunehmendem Maße aber auch Keramik, wegen der höheren Temperaturbelastbarkeit. Keramische Strahlrohre werden zur Beheizung von Industrieöfen bis zu Ofenraumtemperaturen von 1300°C eingesetzt. An der Flanschverbindung dieser Strahlrohre, die zum Einbau und zur Befestigung der Rohre dient, treten im Ruhestand die aus der Verspannung resultierenden Eigenspannungen und zusätzlich im Betriebszustand temperaturbedingte Spannungen auf. Auch das Eigengewicht muß von der Flanschverbindung aufgenommen werden.

Da Strahlrohre häufig mit Rekuperatorbrennern beheizt oder im Kühlfall der Brenner mit Kühlluft beaufschlagt werden, wobei die Rauchgase oder die erwärmte Kühlluft aus dem Rohr über den Brenner zur zentralen Abgasführung geleitet werden, können an der Flanschverbindung der Strahlrohre Temperaturen bis zu 800°C auftreten. Hinsichtlich ihrer Festigkeit und Gasdichtheit sind diese Verbindungen bei Temperaturbeanspruchung problematisch, weil die einzelnen Bauteile unterschiedliche Wärmeausdehnungskoeffizienten besitzen.

Beispiele für derartige Verbindungen sind zum einen das Verspannen eines mit einem Bund versehenen keramischen Rohres zwischen zwei Stahlflanschen, die Verwendung einer Stopfbuchspakkung, oder des Verklebens der Teile mit anorganischen Klebern oder ein Verlöten mit Glaslot.

Diese Lösungen bieten keinen festen Halt für das Strahlrohr, da sie sich bei Erwärmung lockern und gasdurchlässig werden. Die beiden erstgenannten Lösungen können zwar nachgespannt werden, was jedoch für den praktischen Betrieb nachteilig ist.

Aus der eingangs genannten DE 195 05 401 C1 ist ein keramisches Strahlrohr für Industrieöfen bekannt, das endseitig über eine Dichtungseinrichtung an einem Flanschteil abgedichtet gehalten ist, bei dem die Dichtungseinrichtung eine dünnwandige metallische Hülse ist, die einen ersten, auf das keramische Strahlrohr aufgeschrumpften Abschnitt aufweist, der über einen zweiten Abschnitt mit dem Flanschteil größeren Durchmessers abgedichtet verbunden ist.

Hierdurch wird zwar eine verbesserte und vereinfachte Abdichtung geschaffen, jedoch ist die Herstellung der Schrumpfverbindung aufwendig. Auch ist die aufgeschrumpfte Metallhülse nachträglich kaum auswechselbar.

Aus der US-A-3,549,178 ist ferner eine Halterung zur temperaturbeständigen Festlegung eines Rohres an einem Flansch gemäß der eingangs genannten Art bekannt, wobei ein Spannring, der am Flansch über Spannschrauben befestigt wird, über einen Stützring auf ein Ende des Rohrs einwirkt, um dieses gegen den Flansch anzupressen. Um thermisch bedingte Veränderungen der Halterung zu vermeiden, sind die Längen der Spannschrauben und deren thermischer Ausdehnungskoeffizient einerseits auf die Länge der zwischen dem Spannring und dem Rohrende verbleibenden Zwischenglieder und deren thermischen Ausdehnungskoeffizienten andererseits abgestimmt.

Damit wird grundsätzlich ermöglicht, dass eine einmal eingestellte Vorspannung auch bei Temperaturveränderungen erhalten bleibt.

Als nachteilig hierbei hat sich erwiesen, dass die Spannschrauben unmittelbar am Flansch angreifen, wodurch die Gefahr eines ungleichmäßigen Anziehens der Spannschrauben besteht, was zu einem Unbrauchbar-Werden der Abdichtung zwischen dem Rohr und dem Flansch führen kann. Auch lassen sich die unmittelbar am Flansch angreifenden Spannschrauben nach längerem Betrieb vielfach nicht mehr lösen.

Aus der US-A-3,694,007 ist ferner eine einstellbare Kupplungsverbindung zur Verbindung von zwei Rohren bekannt, bei denen das eine Rohr ein gewelltes, ringförmiges Endstück aufweist, das mittels einer Mehrzahl von an dem gewellten Endstück angreifenden Spannelementen gegen einen Flansch an dem anderen Rohr verspannbar ist.

Ein Ausgleich für Temperaturunterschiede ist bei dieser Kupplungsvorrichtung nicht vorgesehen.

Der Erfindung liegt somit die Aufgabe zugrunde, eine verbesserte Halterung zur temperaturbeständigen Festlegung eines Rohres an einem Flansch zu schaffen, die insbesondere zur Befestigung von keramischen Strahlrohren bei Industrieöfen geeignet ist und eine dauerhafte und auch bei hohen Temperaturen beständige Verbindung und Abdichtung des Rohres gegenüber dem Flansch ermöglicht. Dabei soll die Flanschverbindung auf möglichst einfache Weise herstellbar sein und auch nachträglich ohne weiteres lösbar sein.

Diese Aufgabe wird bei einer Halterung gemäß der eingangs genannten Art erfindungsgemäß dadurch gelöst, dass der Spannteil an einem Abstandshalter eingreift, der am Flansch festgelegt ist, und dass am Abstandshalter eine Spanneinrichtung mit einem Druckring angreift, der gegenüber dem Abstandshalter verstellbar festgelegt ist, um das Ende des Rohres gegen den Flansch zu verspannen, und dass die Spanneinrichtung und der Abstandshalter aus Werkstoffen bestehen, deren thermische Ausdehnungskoeffizienten und Längenverhältnisse derart aufeinander abgestimmt sind, dass eine durch eine thermisch bedingte Längenänderung des Rohrs bedingte Längenänderung annähernd ausgeglichen wird.

Die Aufgabe der Erfindung wird auf diese Weise vollkommen gelöst.

Erfindungsgemäß wird die Befestigung einer Schrumpfhülse auf dem Rohr vermieden. Stattdessen wird durch die Unterschiede in den thermischen Ausdehnungskoeffizienten zwischen dem Abstandhalter und der Spanneinrichtung eine thermisch bedingte Längenänderung des Rohrs annähernd ausgeglichen. Obwohl das Rohr aus einem Keramikmaterial, aus Glas oder anderem Material bestehen kann, dass einen sehr geringen thermischen Ausdehnungskoeffizienten aufweist, kann die Halterung aus metallischen Werkstoffen hergestellt werden, wobei dennoch selbst bei starken Temperaturunterschieden eine spannungsarme Befestigung des Rohrs am Flansch erreicht wird.

Die Halterung kann jederzeit gelöst werden, um das Rohr auszubauen oder auszuwechseln. Dabei müssen keine Teile am Rohr selbst angebracht werden.

Da ein Druckring vorgesehen ist, der gegenüber dem am Flansch festgelegten Abstandshalter verstellbar ist, ist eine besonders gleichmäßige Anpressung des Rohrs an den Flansch gewährleistet, die auch bei höheren Temperaturveränderungen weitgehend erhalten bleibt.

Es versteht sich, daß die Erfindung nicht nur zur Befestigung von Strahlrohren bei Industrieöfen verwendet werden kann, sondern auch für eine Flanschverbindung zwischen zwei Rohren, die aus Keramik, Glas oder einem ähnlichen Material bestehen, verwendet werden kann. Auch ist die Anwendung nicht auf Keramikrohre beschränkt, sondern kann ganz allgemein auf solche Rohre angewendet werden, die einen geringeren oder auch einen höheren Ausdehnungskoeffizienten als die betreffende Halterung aufweisen. Die Anwendung der erfindungsgemäßen Halterung wäre demnach

auch zur Befestigung von solchen Rohren denkbar, die aus einem metallischen Material mit einem geringeren Ausdehnungskoeffizienten als dem Ausdehnungskoeffizienten der Halterung bestehen, oder auch zur Befestigung von Stahlrohren an Keramikflächen denkbar.

Gemäß einer weiteren Ausgestaltung der Erfindung ist das Rohr an seinem Ende stirnseitig mittels einer Dichtung gegen den Flansch abgedichtet.

In zusätzlicher Weiterbildung dieser Ausführung liegt das Rohr mit seiner Stirnfläche an der Dichtung an, die in einer Vertiefung des Flansches aufgenommen ist.

Durch diese Maßnahmen läßt sich auf einfache Weise eine wirkungsvolle Abdichtung des Rohrs gegenüber dem Flansch erreichen.

Gemäß einer weiteren Ausgestaltung der Erfindung weist das Rohr an seinem Ende eine Durchmessererweiterung auf, an der die Spanneinrichtung angreift, um das Ende gegen die Dichtung zu beaufschlagen.

Durch diese Maßnahmen läßt sich eine wirkungsvolle Abdichtung des Rohrs gegenüber dem Flansch gewährleisten und die notwendige Anpreßkraft des Rohrs gegen die Dichtung in einfacher Weise formschlüssig übertragen.

Gemäß einer weiteren Ausgestaltung der Erfindung ist das Rohr an seinem Ende mit einem Isolierring versehen, der innerhalb einer Erweiterung des Innenquerschnitts aufgenommen ist.

Durch diese Maßnahme wird die thermische Isolierung des Flansches gegenüber einer heißen oder kalten Gasströmung und dem Rohr verbessert, was zu einer weiteren Reduktion thermisch bedingter Spannungen führt.

Gemäß einer weiteren Ausführung der Erfindung ist auf der Oberfläche des Rohres eine Isolierung zur Wärmeisolierung der Spanneinrichtung und des Abstandshalters gegen das Rohr vorgesehen.

Auch hierdurch wir die thermische Isolierung der Halterung gegenüber dem Rohr verbessert, wodurch thermisch bedingte Spannungen reduziert werden und die Halterung selbst vor nachteiligen Temperatureinflüssen geschützt wird.

Der Abstandshalter ist in vorteilhafter Weiterbildung der Erfindung mit dem Flansch verschweißt, verschraubt oder vernietet.

Auf diese Weise läßt sich eine einfache Befestigungsmöglichkeit des Abstandshalters am Flansch erreichen, um ein Anpressen des Endes des Rohrs gegen den Flansch zu erlauben.

In zusätzlicher Weiterbildung der Erfindung weist der Spannteil einen Spannring auf, der mittels Spannelementen festgelegt ist, die am Abstandshalter angreifen.

Auf diese Weise läßt sich mit einfachen Mitteln eine lösbare Befestigung des Spannteils am Abstandshalter erreichen.

Bei einer Weiterbildung dieser Ausführung weisen die Spannelemente Schrauben auf, die in Bolzen eingeschraubt sind, die in Öffnungen des Abstandshalters aufgenommen sind.

Bei einer alternativen Ausführung weisen die Spannelemente Spannhaken auf, die in Öffnungen des Abstandshalters eingreifen und mit dem Spannring verschraubt sind.

Mit beiden Varianten läßt sich eine sichere Festlegung des Spannrings bei einer einfachen Montage erreichen.

In zusätzlicher Weiterbildung der Erfindung weist die Spanneinrichtung einen Druckring auf, der über Gewindestifte, die am Spannteil angreifen, gegen das Ende des Rohrs verspannbar ist.

Auf diese Weise läßt sich eine einstellbare Vorspannung auf das Rohr ausüben, um das Ende gegen den Flansch in der gewünschten Weise zu beaufschlagen. Dabei wird durch den Druckring ein gleichmäßiges Anpressen des Rohrs ermöglicht.

In zusätzlicher Weiterbildung der Erfindung ist zwischen dem Ende des Rohrs und dem Druckring eine Ausgleichsscheibe angeordnet.

Auf diese Weise können Unebenheiten der Oberfläche des Keramikrohrs, an dem der Druckring angreift, ausgeglichen werden und so eine gleichmäßige Kraftübertragung auch bei größeren Fertigungstoleranzen des Keramikrohrs erreicht werden.

Die Ausgleichsscheibe kann wie auch die Dichtung z.B. aus einem Faserwerkstoff bestehen, als Graphitdichtung ausgeführt sein oder etwa aus einem sehr duktilen Metall wie z.B. Kupfer bestehen.

In zusätzlicher Weiterbildung der Erfindung ist am Flansch eine weitere Halterung zur Aufnahme eines zweiten Rohrs aus keramischem Material vorgesehen.

Auf diese Weise wird es ermöglicht, die erfindungsgemäße Halterung auch zur Verbindung von zwei Rohren zu verwenden. Somit lassen sich bspw. keramische Rohre oder aus Glas bestehende Rohre in zuverlässiger Weise verbinden, wobei eine relativ spannungsarme Verbindung über einen großen Temperaturbereich gewährleistet werden kann.

Ein Ausführungsbeispiel der Erfindung ist in der Zeichnung dargestellt und wird in der nachfolgenden Beschreibung näher erläutert. Es zeigen:
- Fig. 1: eine Ansicht auf eine erfindungsgemäße Halterung von vorn, wobei ein in der Halterung aufgenommenes Rohr geschnitten dargestellt ist;
- Fig. 2: einen Schnitt längs der Linie II-II gemäß Fig. 1;
- Fig. 3-5: verschiebbare alternative Ausführungen des Rohres im Bereich seines Endes in vergrößerter Darstellung und
- Fig. 6: eine alternative Ausführung eines Spannelementes zur Festlegung des Spannrings am Abstandshalter in vergrößerter Darstellung.

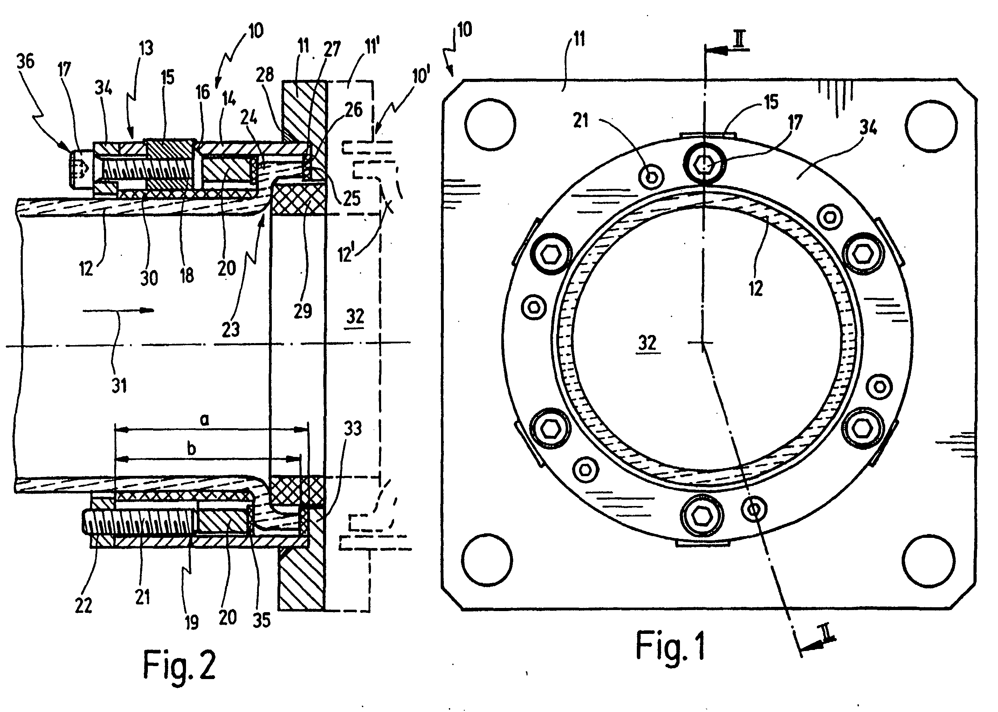

In den Fig. 1 und 2 ist eine erfindungsgemäße Halterung insgesamt mit der Ziffer 10 bezeichnet. Die Halterung 10 dient zur Festlegung eines aus feuerfester Keramik bestehenden Rohrs 12 an einem quadratischen Flansch 11, der bspw. in einen Industrieofen eingesetzt sein kann. Bei dem Rohr 12 kann es sich um ein Strahlrohr handeln, das etwa mit einem Rekuperatorbrenner beheizt wird und von Rauchgasen durchströmt wird, wie in Fig. 2 durch den Pfeil 31 angedeutet ist. Da der Flansch 11 aus Metall besteht, das Rohr 12 jedoch aus feuerfester Keramik, z.B. aus SiSiC-Keramik, stellt wegen der unterschiedlichen thermischen Ausdehnungskoeffizienten von Stahl und Keramik die Herstellung einer gasdichten und spannungsarmen Verbindung ein besonderes Problem dar.

Mit der erfindungsgemäßen Lösung wird dieses Problem im wesentlichen dadurch gelöst, daß am Flansch 11 ein Spannteil 13 befestigt wird, an dem eine Spanneinrichtung 19 angreift, um ein Ende 23 des Rohrs 12 in Richtung auf den Flansch 11 vorzuspannen. Dabei ist die Anordnung so getroffen, daß sich ein gleichmäßiger Anpreßdruck des Rohrs 12 gegen den Flansch 11 über einen weiten Temperaturbereich erreichen läßt. Somit wird selbst bei großen Temperaturveränderungen mit Spitzentemperaturen in der Größenordnung von bis etwa 800°C im Bereich der Flanschverbindung eine sichere und spannungsarme Aufnahme und in Verbindung mit geeigneten Dichtungen eine gute Abdichtung zwischen Rohr 12 und Flansch 11 gewährleistet.

Der Flansch 11 weist zur Aufnahme des Rohres 12 eine zentrale Ausnehmung 32 auf, an die sich eine kreisringförmige Vertiefung 25 anschließt. Hierdurch ist ein Absatz 33 gebildet, an dem ein in der Vertiefung 25 aufgenommener zylindrischer Abstandshalter 14 anschlägt und mittels einer umlaufenden Schweißnaht 28 am Flansch 11 befestigt ist. Am Grund der Vertiefung 25 ist ferner eine Ringdichtung 27 aufgenommen, die am Absatz 33 der Vertiefung 25 anliegt.

Das Rohr 12 weist an seinem dem Flansch 11 zugewandten Ende 23 eine Durchmessererweiterung 24 oder einen Bund auf, der mit seiner Stirnfläche 26 an der Ringdichtung 27 anliegt, so daß bei Anpressen des Rohrs 12 gegen den Flansch 11 eine gasdichte Abdichtung zwischen Rohr 12 und Flansch 11 erreicht werden kann.

Am Abstandshalter 14 ist ein Spannring 34 mittels Spannelementen 36 befestigt. Hierzu sind am Abstandshalter 14 in gleichmäßigen Winkelabständen zueinander insgesamt sechs Öffnungen 16 vorgesehen, in die Bolzen 15 seitlich eingesteckt sind. An diesen Bolzen 15 ist der Spannring 34 mit Hilfe von Schrauben 17 befestigt, die in Gewinde 18 der Bolzen 15 eingeschraubt sind.

An diesem Spannring 34 ist ein Druckring 20 befestigt, der mit Hilfe von insgesamt sechs Gewindestiften 21, die in Gewinde 22 am Spannring 34 eingreifen, gehalten wird. Dabei liegt der Druckring 20 an einer Ausgleichsscheibe 35 an, die unmittelbar an dem durch die Durchmessererweiterung 24 gebildeten Bund des Rohrendes 23 anliegt, so daß durch ein Anziehen der Gewindestifte 21 der Druckring 20 gegen die Durchmessererweiterung 24 gedrückt wird und somit das Ende 23 des Rohrs 12 mit seiner Stirnfläche 27 gegen die Dichtung 26 des Flansches 11 vorspannt. Die Ausgleichsscheibe 35 dient zum Ausgleich von Fertigungstoleranzen des Rohrs 12 und besteht wie die Ringdichtung 27 aus einem Dichtungsmaterial, etwa einem Faserwerkstoff, einem Graphitwerkstoff oder z.B. aus Kupfer.

Zum Zwecke der Wärmeisolierung ist zwischen der Durchmessererweiterung 24 und dem Spannring 34 noch eine rohrförmige Dich- . tung 30, die z.B. aus Keramikmaterial bestehen kann, auf die Oberfläche des Rohrs 12 aufgeschoben, um so den außenliegenden Teil der Halterung 10 thermisch zu isolieren. Zusätzlich ist zur Verbesserung der Wärmeisolation ein Dichtungsring 29 vorgesehen, der in der zentralen Öffnung 32 des Flansches 11 aufgenommen ist und in einer Innendurchmessererweiterung 24 aufgenommen ist. Die lichte Weite dieses Isolierrings 29 entspricht etwa der lichten Weite des Rohres 12.

Während sämtliche Teile der Halterung 10 außer den Isolierringen 29 und 30, der Dichtung 27 und der Ausgleichsscheibe 35 aus Metall bestehen, besteht im dargestellten Fall das Rohr 12 wie bereits erwähnt aus Keramikmaterial. Um nun thermisch bedingte Längenänderungen durch die unterschiedlichen Wärmeausdehnungskoeffizienten von Keramik einerseits und Metall andererseits auszugleichen, bestehen der Druckring 20 und die Gewindestifte 21 aus einem anderen Werkstoff als der Abstandshalter 14, die Bolzen 15 und die Schrauben 17. Da sich auch das aus Keramik bestehende Rohr 12 bei einer Erwärmung ausdehnt, jedoch nicht in so starkem Maße wie die aus metallischen Werkstoffen bestehende Halterung 10, bestehen der Druckring 20 und die Gewindestifte 21 aus einem Metall, das vorzugsweise einen etwas höheren thermischen Wärmeausdehnungskoeffizienten aufweist als der Werkstoff, aus dem der Abstandshalter 14, die Bolzen 15 und die Schrauben 17 bestehen.

Dabei können die thermischen Ausdehnungskoeffizienten der beiden Werkstoffe und die bei der thermisch bedingten Längenänderung maßgeblichen Längenverhältnisse, die in Fig. 2 mit a und b bezeichnet sind, so aufeinander abgestimmt werden, daß sich im Bereich der während des Betriebs auftretenden Temperaturverhältnisse eine thermisch bedingte Längenänderung des Rohrabschnitts a mit einer thermisch bedingten Längenänderung der wirksamen Länge b von Druckring 20 und Gewindestiften 21 gerade kompensiert, so daß sich selbst bei einer Temperaturerhöhung oder Temperaturerniedrigung über einen weiten Temperaturbereich keine Veränderung des über den Druckring 20 erzeugten Anpreßdruckes des Rohres 12 gegen die Dichtung 27 ergibt, die in der Vertiefung 25 des Flansches 11 aufgenommen ist.

Wie in Fig. 2 angedeutet ist, kann die erfindungsgemäße Halterung natürlich auch dazu verwendet werden, um zwei Rohrenden miteinander zu verbinden, um so eine temperaturbeständige und gasdichte Verbindung zweier Rohre zu ermöglichen. In Fig. 2 ist hierzu ein zweites Rohr gestrichelt angedeutet und mit der Ziffer 12' bezeichnet. Eine zweite Halterung ist mit 10' angedeutet, während ein entsprechend angepaßter Flansch mit 11' bezeichnet ist.

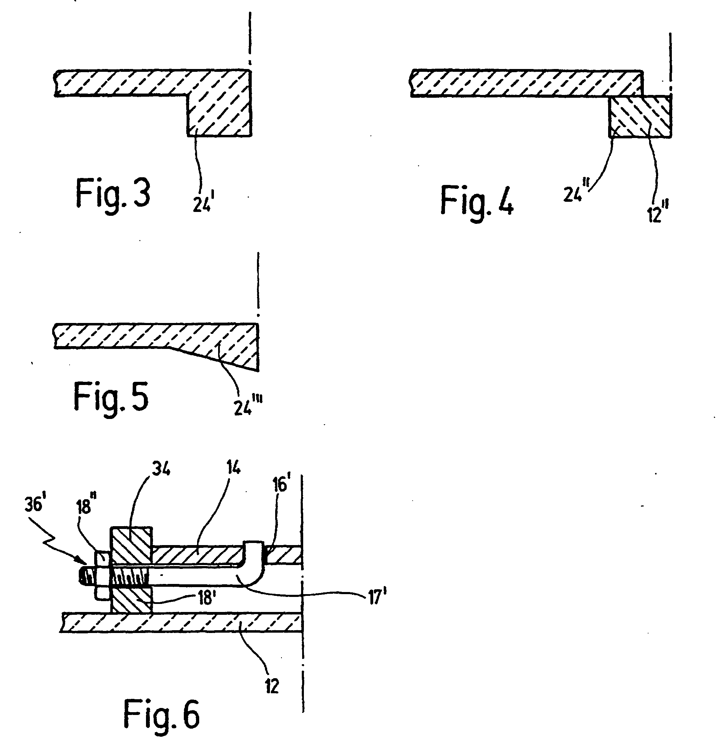

In den Fig. 3-5 sind verschiedene Alternativen der Ausführung des Rohrs im Bereich seines Endes dargestellt, an dem die erfindungsgemäße Halterung 10 angreift.

Gemäß Fig. 3 ist eine Durchmessererweiterung 24' am Ende des Rohrs dadurch gebildet, daß am Rohrende ein Außenbund vorgesehen ist, der einstückig mit dem Rohr ausgebildet ist.

Gemäß Fig. 4 ist eine Durchmessererweiterung 24'' am Ende des Rohrs dadurch gebildet, daß ein Rohrstück 12'' am Ende des Rohrs aufgesetzt ist, das unlösbar mit dem Ende des Rohrs verbunden ist.

Gemäß Fig. 5 ist die Durchmessererweiterung 24''' am Ende des Rohrs durch einen Außenkonus gebildet.

Es versteht sich, daß weitere Ausführungsformen der Durchmessererweiterung möglich sind. Insgesamt dienen diese jeweils zu einer formschlüssigen Festlegung der Halterung am Rohr.

In Fig. 6 ist eine alternative Möglichkeit der Befestigung des Spannrings 34 mittels Spannelementen 36' am Abstandshalter 14 dargestellt.

Die Spannelemente 36' weisen Spannhaken 17' auf, die mit ihrem abgewinkelten Ende in Öffnungen 16' des Abstandshalters angreifen und die an ihrem anderen Ende ein Gewinde 18' aufweisen, auf die Muttern 18'' aufgeschraubt sind, um so den Spannring 34 am Abstandshalter 14 zu befestigen.

## Patentansprüche

1. Halterung zur temperaturbeständigen Festlegung eines Rohres (12, 12') an einem Flansch (11, 11'), insbesondere zur Festlegung eines keramischen Strahlrohres, mit einem am Flansch (11, 11') gehaltenen Spannteil (13), über den ein Ende (23) des Rohres (12) gegen den Flansch (11, 11') verspannbar ist, wobei der Spannteil (13) an einem Abstandshalter (14) angreift, der am Flansch (11, 11') festgelegt ist, wobei am Abstandshalter (14) eine Spanneinrichtung (19) mit einem Druckring (20) angreift, der gegenüber dem Abstandshalter (14) verstellbar festgelegt ist, um das Ende (23) des Rohres (12, 12') gegen den Flansch (11, 11') zu verspannen, und wobei die Spanneinrichtung (19) und der Abstandshalter (14) aus Werkstoffen bestehen, deren thermische Ausdehnungskoeffizienten und Längenverhältnisse derart aufeinander abgestimmt sind, daß eine durch eine thermische bedingte Längenänderung des Rohrs (12, 12') bedingte Längenänderung annähernd ausgeglichen wird.

2. Halterung nach Anspruch 1, **dadurch gekennzeichnet, daß** das Rohr (12, 12') an seinem Ende (23) stirnseitig mittels einer Dichtung (27) gegen den Flansch (11, 11') abgedichtet ist.

3. Halterung nach Anspruch 2, **dadurch gekennzeichnet, daß** das Rohr (12, 12') mit seiner Stirnfläche (26) an der Dichtung (27) anliegt, die in einer Vertiefung (31) des Flansches (11, 11') aufgenommen ist.

4. Halterung nach einem der vorhergehenden Ansprüche, **dadurch gekennzeichnet, daß** das Rohr (12, 12') an seinem Ende (23) eine Durchmessererweiterung (24) aufweist, an der die Spanneinrichtung (19) angreift, um das Ende (23) gegen die Dichtung (26) zu beaufschlagen.

5. Halterung nach einem der vorhergehenden Ansprüche, **dadurch gekennzeichnet, daß** das Rohr (12, 12') an seinem Ende (23) durch einen Isolierring (29) gegen den Flansch (11, 11') thermisch isoliert ist, der innerhalb einer Erweiterung des Innenquerschnitts aufgenommen ist.

6. Halterung nach einem der vorhergehenden Ansprüche, **dadurch gekennzeichnet, daß** auf der Oberfläche des Rohres eine Isolierung (30) zur Wärmeisolierung des Spannteils (13) der Spanneinrichtung (19) und des Abstandshalters (14) gegen das Rohr (12, 12') vorgesehen ist.

7. Halterung nach einem der vorhergehenden Ansprüche, **dadurch gekennzeichnet, daß** der Abstandshalter (14) mit dem Flansch (11, 11') verschweißt, verschraubt oder vernietet ist.

8. Halterung nach einem der vorhergehenden Ansprüche, **dadurch gekennzeichnet, daß** der Spannteil (13) einen Spannring (34) aufweist, der mittels Spannelementen (36, 36') festgelegt ist, die am Abstandshalter (14) angreifen.

9. Halterung nach Anspruch 8, **dadurch gekennzeichnet, daß** die Spannelemente (36) Schrauben (17) aufweisen, die in Bolzen (15) eingeschraubt sind, die in Öffnung (16) des Abstandshalters (14) aufgenommen sind.

10. Halterung nach Anspruch 8, **dadurch gekennzeichnet, daß** die Spannelemente (36') Spannhaken (17') aufweisen, die in Öffnungen (16') der Abstandshalter (14) eingreifen und mit dem Spannring (34) verschraubt sind.

11. Halterung nach einem der vorhergehenden Ansprüche, **dadurch gekennzeichnet, daß** der Druckring (20) über Gewindestifte (21), die am Spannteil (13) angreifen, gegen das Ende (23) des Rohrs (12, 12') verspannbar ist.

12. Halterung nach Anspruch 11, **dadurch gekennzeichnet, daß** zwischen dem Ende (23) des Rohrs (12, 12') und dem Druckring (20) eine Ausgleichsscheibe (35) angeordnet ist.

13. Halterung nach einem der vorhergehenden Ansprüche, **dadurch gekennzeichnet, daß** am Flansch (11') eine weitere Halterung (10') zur Aufnahme eines zweiten Rohres (12') aus keramischem Material vorgesehen ist.

## Claims

1. Fixture for a temperature resistant mounting of a tube (12, 12') to a flange (11, 11'), in particular for mounting a ceramic radiant heater tube, comprising a clamping part (13) held by a flange and being adapted for clamping an end (23) of the tube (12) against the flange (11, 11'), wherein the clamping part (13) engages a spacer (14) which is mounted at the flange (11, 11'), wherein a clamping means (19) engages the spacer (14) with a pressure ring (20), the pressure ring being mounted displaceably relative to the spacer (14) for clamping the end (23) of the tube (12, 12') against the flange (11, 11'), and wherein the clamping means (19) and the spacer (14) consist of materials the coefficients of thermal expansion of which and the longitudinal relations of which are matched to each other so that a length deviation caused by thermal length deviation of the tube (12, 12') is approximately leveled out.

2. The fixture according to claim 1, **characterized in that** the tube (12, 12') is sealed at its end (23) against the flange (11, 11') by means of a seal (27).

3. Fixture according to claim 2, **characterized in that** the tube (12, 12') rests with its front face (26) against the seal (27) which is received in a recess (31) of the flange (11, 11').

4. Fixture according to any of the proceeding claims, **characterized in that** the tube (12, 12') at its end (23) comprises a diameter enlargement (24) which engages the clamping device (19) for biasing the end (23) against the seal (26).

5. Fixture according to any of the proceeding claims, **characterized in that** the tube (12, 12') is thermally insulated at its end (23) against the flange (11, 11') by means of an insulating ring (29) which is received within an enlargement of the inner cross section.

6. Fixture according to any of the proceeding claims, **characterized in that** an insulation (30) is provided at a surface of the tube for thermally insulating the clamping part (13) of the clamping device (19) and of the spacer (14) against the tube (12, 12').

7. Fixture according to any of the proceeding claims, **characterized in that** the spacer (14) is welded, screwed or riveted to the flange (11, 11').

8. Fixture according to any of the proceeding claims, **characterized in that** the clamping device (13) comprises a clamping ring (34) which is mounted by means of clamping elements (36, 36') engaging the spacer (14).

9. Fixture according to claim 8, **characterized in that** the clamping elements (36) comprise the screws (17) which are screwed into studs (15) being received in orifices (16) of the spacer (14).

10. Fixture according to claim 8, **characterized in that** the clamping elements (36') comprise clamping hooks (17') engaging through orifices (16') of the spacer (14) and being screw-connected with the clamping ring (34).

11. Fixture according to any of the proceeding claims, **characterized in that** the pressure ring (20) can be biased against the end (23) of the tube (12, 12') by means of threaded pins (21) engaging the clamping part (13).

12. Fixture according to claim 11, **characterized in that** a compensating disk (35) is arranged between the end (23) of the tube (12, 12') and the pressure ring (20).

13. Fixture according to any of the proceeding claims, **characterized in that** a further fixture (10') is provided at the flange (11') for receiving a second tube (12') consisting of a ceramic material.

## Revendications

1. Montage pour la fixation résistant à la température d'un tube (12, 12') sur une bride, en particulier pour fixer un tube de rayonnement céramique, avec une pièce de serrage (13) maintenue sur la bride (11, 11'), par l'intermédiaire de laquelle une extrémité (23) du tube (12) peut être serrée contre la bride (11, 11'), la pièce de serrage (13) étant appliquée sur un écarteur (14) qui est fixé à la bride (11, 11'), un dispositif de serrage (19) étant appliqué sur l'écarteur (14) avec une bague de pression (20) qui est fixée de manière ajustable par rapport à l'écarteur (14) pour serrer l'extrémité du tube (12, 12') contre la bride (11, 11') et le dispositif de serrage (19) et l'écarteur (14) étant réalisés dans des matériaux dont les coefficients de dilatation thermique et les rapports de longueur sont accordés les uns aux autres de telle façon qu'une variation de longueur résultant d'une variation de longueur du tube (12, 12') due à la chaleur est pratiquement compensée.

2. Montage selon la revendication 1, **caractérisé en ce que** le tube (12, 12') est rendu étanche à son extrémité (23) côté frontal contre la bride (11, 11') au moyen d'un joint (27).

3. Montage selon la revendication 2, **caractérisé en ce que** le tube (12, 12') repose avec sa surface frontale (26) contre le joint (27) qui est logé dans une cavité (31) de la bride (11, 11').

4. Montage selon l'une quelconque des revendications précédentes, **caractérisé en ce que** le tube (12, 12') présente à son extrémité (23) un élargissement de diamètre (24) contre lequel le dispositif de serrage (19) est appliqué pour admettre l'extrémité contre le joint (26).

5. Montage selon l'une quelconque des revendications précédentes, **caractérisé en ce que** le tube (12, 12') est isolé thermiquement à son extrémité (23) par une bague isolante (29) contre la bride (11, 11') qui est logée à l'intérieur d'un élargissement de la section intérieure.

6. Montage selon l'une quelconque des revendications précédentes, **caractérisé en ce qu'**une isolation (30) est prévue sur la surface du tube pour isoler thermiquement la pièce de serrage (13) du dispositif de serrage (19) et l'écarteur (14) contre le tube (12, 12').

7. Montage selon l'une quelconque des revendications précédentes **caractérisé en ce que** l'écarteur (14) est soudé, vissé ou riveté avec la bride (11, 11').

8. Montage selon l'une quelconque des revendications précédentes, **caractérisé en ce que** la pièce de serrage (13) présente une bague de serrage (34) qui est fixée au moyen d'éléments de serrage (36, 36') qui s'appliquent sur l'écarteur (14).

9. Montage selon la revendication 8, **caractérisé en ce que** les éléments de serrage (36) présentent des vis qui sont vissées dans des boulons (15) qui sont logés dans l'ouverture (16) de l'écarteur (14).

10. Montage selon la revendication 8, **caractérisé en ce que** les éléments de serrage (36') présentent des crochets de serrage (17') qui s'insèrent dans des ouvertures (16') des écarteurs (14) et sont vissés avec la bague de serrage (34).

11. Montage selon l'une quelconque des revendications précédentes, **caractérisé en ce que** la bague de pression (20) peut être serrée contre l'extrémité (23) du tube (12, 12') par l'intermédiaire de tiges filetées (21) qui s'appliquent sur la pièce de serrage (13).

12. Montage selon la revendication 11, **caractérisé en ce qu'**une rondelle de compensation (35) est disposée entre l'extrémité (23) du tube (12, 12') et la bague de pression (20).

13. Montage selon l'une quelconque des revendications précédentes, **caractérisé en ce qu'**un autre montage (10') est prévu sur la bride (11') pour loger un deuxième tube (12') en matière céramique.
